# FASCICULE DE BREVET EUROPEEN

(11) **EP 0 573 357 B1**
(45) Date de publication et mention de la délivrance du brevet: **07.04.1999**
(21) Numéro de dépôt: 93401412.7
(22) Date de dépôt: 02.06.1993
(51) Int. Cl.: G01D 1/14, G05B 23/02

(54) **Procédé de diagnostic d'un processus évolutif**
Verfahren zur Diagnose eines laufenden Prozesses
Diagnostic procedure for an on-going process

(30) Priorité: 03.06.1992 FR 9206708
(43) Date de publication de la demande: 08.12.1993
(73) Titulaire: THOMSON-CSF, 75008 Paris (FR)
(72) Inventeur: Dubost, Laurent, F-92402 Courbevoie Cedex (FR); Heude, Jean-Noel, F-92402 Courbevoie Cedex (FR)
(74) Mandataire: Chaverneff, Vladimir

(56) Documents cités:
- EP-A- 0 351 833
- EP-A- 0 368 794
- EP-A- 0 402 143
- EP-A- 0 416 856
- EP-A- 0 444 801
- US-A- 4 939 648
- ELEKTRONIK, Fachzeitschrift für industrielle Anwender und Entwickler, no. 20, 1991, Franzis-Verlag GmbH, Feldkirchen, DE, D. Gariglio: "Fuzzy in der Praxis", pages 63-75
- PATENT ABSTRACTS OF JAPAN, vol. 14, no. 207 (P-1043), 26/04/1990 & JP-A-02 045 753 (HITACHI LTD.), 15/02/1990
- PATENT ABSTRACTS OF JAPAN, vol. 14, no. 360 (P-1088), 03/08/1990 & JP-A-02 133 900 (POWER REACTOR & NUCLEAR FUEL DEV. CORP.), 23/05/1990

## Description

La présente invention se rapporte à un procédé de contrôle d'un processus évolutif.

Le coût des interventions de maintenance réalisées sur des équipements industriels complexes est souvent considéré par les utilisateurs comme trop important. C'est pourquoi les constructeurs de tels équipements se penchent de plus en plus sur les méthodes susceptibles d'espacer, voire de supprimer certaines consignes d'entretien sans augmenter la fréquence des pannes imprévisibles.

Pour cela une meilleure connaissance d'un certain nombre de processus de fonctionnement est nécessaire. Les évolutions de l'équipement doivent être cernées ; l'état d'avancement des dégradations éventuelles doit être connu.

Les systèmes expérimentés jusqu'à présent sont plutôt déterministes ; ils sont fondés sur le raisonnement suivant :
- si tous les symptômes de l'anomalie x sont présents, alors l'anomalie x est présente.

Cette approche n'est en général pas satisfaisante car il existe des incertitudes liées aux mesures physiques qui permettent de définir l'état courant de l'équipement ; dans la pratique, il arrive presque toujours que l'un ou l'autre des symptômes prévus ne soit pas présent, tandis que l'anomalie est réellement présente.

On connaît d'après les documents EP-A-0 351 833 et EP-A-0 368 794 des procédés de diagnostic d'une installation, mais ces procédés ne permettent pas de tenir compte d'une évolution lente des paramètres mesurés pouvant conduire à une panne.

On connaît d'après les documents ELEKTRONIK, Fachzeitschrift für industrielle Anwender und Entwickler, n°20, 1991, Franzis-Verlag GmbH, Feldkirchen, DE, D. Gariglio : "Fuzzy in der Praxis", pages 63-75 et EP-A-0 402 143 les règles qui régissent les systèmes à logique floue. On sait d'après les documents PATENT ABSTRACTS OF JAPAN, vol. 14, n°207 (P-1043), 26/04/1990 & JP-A-02 045 753 (HITACHI LTD.), 15/12/1990 ainsi que PATENT ABSTRACTS OF JAPAN, vol. 14, n°360 (P-1088), 03/08/1990 & JP-A-02 133 900 (POWER REACTOR & NUCLEAR FUEL DEV. CORP.), 23/05/1990 que les systèmes à logique floue peuvent être utilisés dans des procédés de diagnostic.

La présente invention a pour objet un procédé de contrôle d'un processus évolutif, tel qu'un processus de fabrication industriel, ou le fonctionnement d'un équipement, qui permette, en temps réel, d'optimiser les opérations de maintenance, de reconnaître des situations d'anomalie et de déterminer le plus sûrement possible leur(s) cause(s), de remédier le plus rapidement possible à ces anomalies, et de prévoir le plus rapidement et le plus sûrement possible d'éventuelles dégradations de caractéristiques des matériels utilisés pouvant induire de futures pannes, ainsi que d'anticiper l'évolution d'un fonctionnement pour des conditions données d'environnement et de commande.

Le procédé de l'invention est un procédé de diagnostic d'un processus évolutif consistant à mesurer des grandeurs physiques caractéristiques de ce processus, à établir à partir de ces grandeurs un état courant du processus et un état de référence de ce même processus, à comparer ces deux états grandeur par grandeur, les valeurs de grandeurs de l'état courant étant attribuées à plusieurs domaines selon leur écart par rapport à la valeur de référence respective, et les grandeurs étant classées en plusieurs catégories élémentaires indicatives de l'importance de chaque grandeur pour l'évolution du processus relative à une déviation répertoriée, et à établir la présence d'une déviation en associant à la déviation pour chaque catégorie élémentaire des règles expertes dont les prémisses qualifient chacune l'appartenance d'une grandeur mesurée à un domaine.

La présente invention sera mieux comprise à la lecture de la description détaillée d'un mode de mise en oeuvre, pris à titre d'exemple non limitatif et illustré par le dessin annexé, sur lequel :
- la figure 1 est un diagramme d'un procédé conforme à l'invention ;
- la figure 2 est un diagramme expliquant le calcul, selon la logique floue, des coefficients de vraisemblance pour déterminer l'appartenance d'un paramètre à une famille de paramètres ;
- les figures 3 et 4 sont des diagrammes de domaines auxquels peut appartenir chaque paramètre utilisé par le procédé de l'invention ;
- la figure 5 est un tableau explicitant des possibilités de déviations de paramètres par rapport à des états nominaux, tableau pouvant être utilisé par le procédé de l'invention ;
- la figure 6 est un tableau montrant un exemple de règle de diagnostic selon la présente invention.

L'invention est décrite ci-dessous en référence à un procédé de diagnostic, en temps réel, d'un équipement en fonctionnement tel qu'une station de dessalinisation d'eau de mer, mais il est bien entendu qu'elle peut s'appliquer à tout processus évolutif, par exemple un équipement, une machine ou un ensemble de machines en fonctionnement, quelle que soit la nature de ces machines (mécanique et/ou électrique et/ou chimique et/ou électronique), leur mode de fonctionnement (continu ou intermittent), leur utilisation (fabrication de produits, production d'énergie, transformation, etc ...) et leur degré de complexité. Bien entendu, l'invention présente un intérêt particulier pour le contrôle et la surveillance d'équipements comportant de nombreux éléments dont l'usure et les conditions de fonctionnement peuvent donner lieu à des pannes difficilement prévisibles avec les procédés connus et/ou dont les causes des pannes sont difficilement détectables ou prévisibles avec les procédés connus.

Le procédé de l'invention est qualifié de procédé de diagnostic. Ce terme concerne non seulement le diagnostic, mais il concerne également la surveillance d'un processus, la recherche des meilleures conditions (ou des conditions optimales) de déroulement de ce processus, par exemple en vue d'optimiser les interventions de maintenance, détecter les signes avant-coureurs de pannes potentielles, prédire avec une bonne précision le moment où une panne risque d'arriver, et minimiser les risques d'occurrence de pannes.

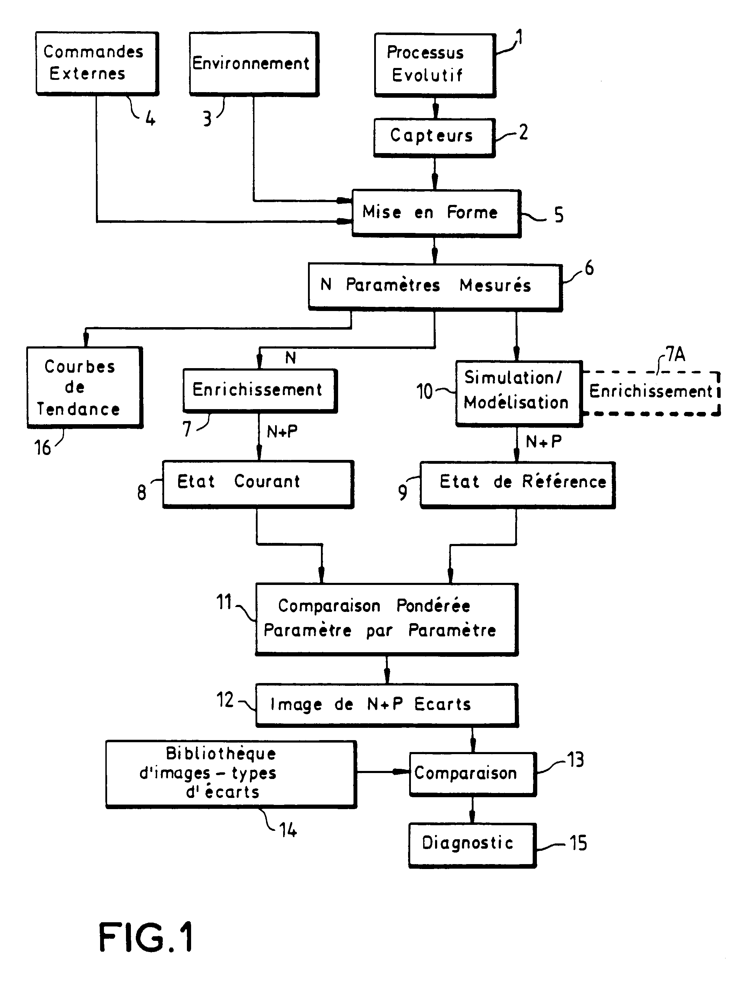

Sur le diagramme de la figure 1, on a représenté en 1 un équipement en fonctionnement, qui est donc le siège d'un processus évolutif. Un ensemble 2 de capteurs est associé à l'équipement 1. Les capteurs de l'ensemble 2 captent toutes les grandeurs physiques (ou paramètres) nécessaires pour diagnostiquer l'état de l'équipement 1 et en déterminer l'évolution.

On peut également prévoir des capteurs 3 d'environnement, par exemple de pression atmosphérique, de température extérieure, etc... On associe des capteurs à des commandes externes 4 manoeuvrées par un opérateur, par exemple des commandes de débit de fluide, de courant de charge, de vitesse de moteurs, etc .

Les informations fournies par tous ces capteurs sont, le cas échéant, mises en forme en 5: elles sont par exemple numérisées (si elles sont fournies sous forme analogique), ou amenées à un même niveau de tension. Cette mise en forme 5 peut également inclure un calcul de paramètres non fournis directement, par exemple le calcul d'une tension de sortie d'un équipement, connaissant sa tension d'entrée et son gain.

Après la mise en forme 5, on dispose en 6 de tous les paramètres nécessaires au diagnostic de l'équipement 1. A partir de ces paramètres 6, on établit d'une part, après une phase 7 d'enrichissement, un état courant 8 de l'équipement 1. La phase d'enrichissement 7, qui n'est pas nécessaire dans tous les cas, consiste à calculer certaines grandeurs non mesurables directement, par exemple un rendement, une section équivalente, une perte de charge, etc, ces grandeurs pouvant être calculées à partir des paramètres mesurés en 6.

D'autre part, à partir des paramètres mesurés en 6, on détermine en temps réel un "état de référence" 9. Cet état de référence est l'image de l'état idéal ou nominal que devrait présenter l'équipement 1 (auquel l'état courant 8 devrait être égal), dans les mêmes conditions de fonctionnement (en particulier dans les mêmes conditions d'environnement 3 et avec les mêmes commandes externes 4) si tous les éléments composant cet équipement fonctionnaient optimalement avec des caractéristiques nominales. Bien entendu, si l'étape 7 existe pour la détermination de l'état 8, il faut prévoir une étape similaire 7A pour la détermination de l'état 9.

Cet état de référence 9 peut soit être obtenu directement à partir des paramètres mesurés en 6, soit être produit par simulation (10) à partir des paramètres mesurés en 6. Cette simulation utilise, de façon connue en soi, un modèle mathématique de l'équipement 1 dont les grandeurs d'entrée sont les paramètres mesurés en 6, ou un sous-ensemble de ces paramètres, et les grandeurs de sortie celles définissant l'état de référence 9. Selon une variante de l'invention, la détermination de l'état de référence 9 peut être faite à partir de données figées stockées dans des tables. La simulation 10 inclut, le cas échéant, l'étape 7A d'enrichissement.

Selon une variante de l'invention, l'état de référence peut être obtenu par apprentissage. L'état de référence peut aussi bien être fixe qu'évolutif (par exemple en fonction de nouvelles conditions de fonctionnement imposées aux équipements).

La cadence d'acquisition des grandeurs (2, 3 et 4) relatives au processus dont est le siège l'équipement 1 est déterminée par la rapidité d'évolution de ce processus et par la rapidité avec laquelle peuvent se produire des pannes.

Si ce processus est à évolution lente (par exemple un traitement chimique de longue durée) et si des anomalies de fonctionnement des éléments de l'équipement ne peuvent produire des pannes que très lentement, cette cadence peut par exemple être de l'ordre de quelques minutes ou dizaines de minutes. Par contre, si l'on a affaire à un processus rapide (par exemple dans un équipement comportant des machines tournantes ou vibrantes, des dispositifs de traitement ou d'usinage de matériaux à action rapide, tels que des machines-outils ou des appareils de traitement de surfaces, en particulier ceux qui doivent fonctionner avec une grande précision), la cadence d'acquisition des mesures par les capteurs 2 peut être par exemple de l'ordre de la seconde, et l'état courant et l'état de référence doivent eux aussi être déterminés rapidement, par exemple toutes les minutes.

A partir des deux états 8 et 9, on effectue une comparaison, paramètre par paramètre (étape 11), en tenant compte de déviations, c'est-à-dire de situations d'anomalies répertoriées (états susceptibles d'évoluer vers une panne ou un incident dommageable). Ces paramètres sont affectés de poids qui sont fonction par exemple du nombre de prémisses correspondantes.

En vue d'effectuer cette comparaison "complexe", on fait appel aux techniques de l'intelligence artificielle et de la logique floue.

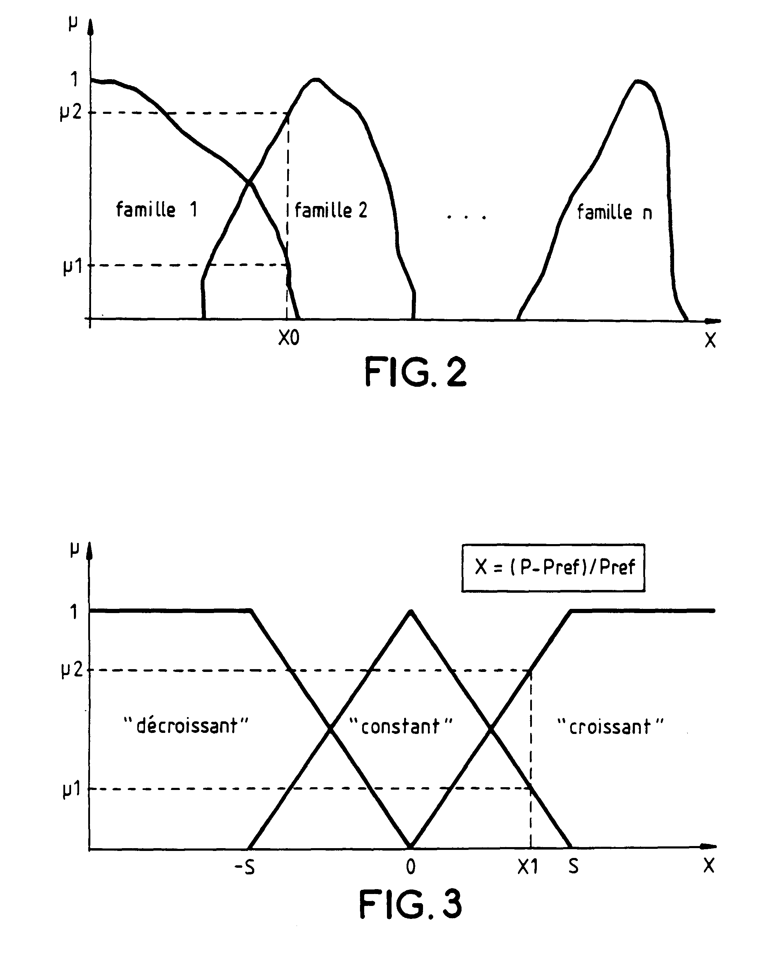

Ainsi, un paramètre X peut appartenir à deux ou plusieurs familles de paramètres. Si ce paramètre X a la valeur XO (figure 2), il présente selon un principe de logique floue un coefficient de vraisemblance µ1 vis-à-vis de la famille 1 et un coefficient de vraisemblance µ2 vis-à-vis de la famille 2, ces deux familles présentant un certain recouvrement. Dans le cas de l'invention, on associe à chaque paramètre un seuil qui détermine des domaines dans lesquels on situe ce paramètre. Par exemple, on délimite trois domaines : un domaine dit "constant" centré sur la valeur de référence de ce paramètre, dans lequel on considère que le paramètre ne varie pas (pour tenir compte des imprécisions des mesures et parce que tant que le paramètre ne sort pas de ce domaine, on considère qu'il n'entraîne aucun effet néfaste sur l'équipement lui-même ou le cas échéant sur les produits fabriqués par l'équipement). Un autre domaine, dit "décroissant", est celui dans lequel on considère que le paramètre diminue ou est inférieur à sa valeur de référence. Le troisième domaine, dit "croissant", est celui dans lequel le paramètre croît ou est supérieur à sa valeur nominale. Bien entendu, l'invention n'est pas limitée à ces trois domaines : on peut en déterminer un plus grand nombre.

On a schématisé sur le diagramme de la figure 3 les trois domaines définis ci-dessus. L'axe des abscisses de ce diagramme porte les valeurs d'écarts relatifs X = (P-P ref)/P ref (P= valeur courante du paramètre et P ref = valeur de référence de ce paramètre), et son axe des ordonnées est gradué en valeurs de µ (coefficient de vraisemblance associé à chacun de ces domaines, similaire à celui défini en référence à la figure 2). On a marqué sur l'axe des abscisses les valeurs -S et + S délimitant le domaine "constant". Si, comme indiqué sur la figure 3, X a la valeur X1, le paramètre P appartient à deux domaines, mais présente un coefficient µ1 d'appartenance au domaine "constant" et un coefficient µ2 d'appartenance au domaine "croissant". Les seuils -S et +S sont fonction de la précision de mesure des capteurs utilisés, et ils peuvent être relatifs, ou absolus si la référence est nulle.

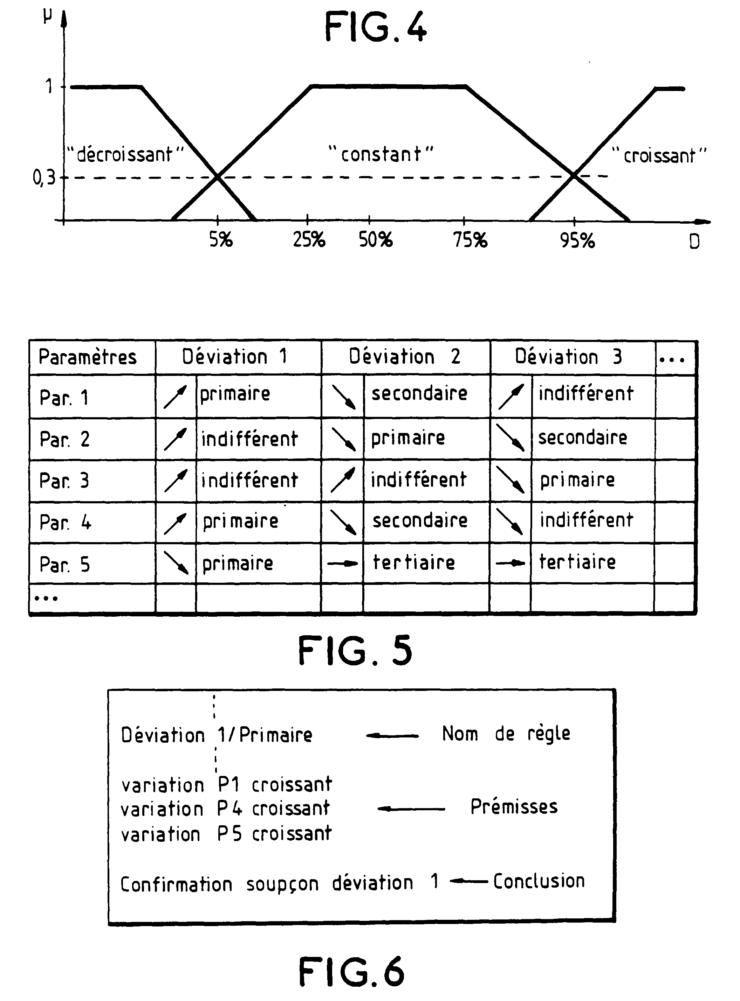

En pratique, on peut par exemple (figure 4) régler ces seuils à partir d'une analyse statistique sur un ensemble de relevés correspondant à des états de référence, c'est-à-dire en l'absence d'anomalies. On étudie alors la distribution D des écarts relatifs de chaque paramètre par rapport aux valeurs de référence issues de la modélisation. On détermine ensuite l'écart-type, la moyenne, les valeurs minimum et maximum et les différents quantiles. On peut alors déterminer les fonctions d'appartenance des paramètres aux domaines précités à l'aide des distributions obtenues. A cet effet, on peut par exemple positionner les seuils de façon que 50 % au moins des valeurs relevées appartiennent au domaine "constant" avec µ égal à 1, et que moins de 10 % des valeurs relevées appartiennent aux domaines "croissant" ou "décroissant" avec µ supérieur à 0,3. Sur les figures 3 et 4, les délimitations de ces domaines sont des segments de droites, mais il est bien entendu que dans la réalité ces délimitations sont des courbes. Cette détermination des écarts relatifs est notée 12 en figure 1.

Afin de pouvoir effectuer une comparaison entre les paramètres de l'état courant d'un équipement avec ceux d'un état de référence, il faut pouvoir classer les paramètres de l'état courant en plusieurs catégories. Chaque paramètre est plus au moins caractéristique d'un symptôme donné.

Selon l'exemple de la figure 5, on a déterminé quatre catégories de paramètres: primaire, secondaire, tertiaire et indifférent. On y a appelé "déviation" un état évoluant vers une panne ou un incident, et les domaines croissant, constant et décroissant sont respectivement figurés par des flèches dirigées vers le haut, horizontalement et vers le bas.

Un paramètre est dit primaire lorsque son écart par rapport à sa valeur de référence est directement évocateur de la déviation considérée, cet écart étant physiquement significatif de la déviation ;
- il est dit secondaire lorsque son écart est physiquement évocateur de la déviation, mais moins directement lié à celle-ci ;
- il est dit tertiaire lorsque son écart est dû à la propagation des effets directs de la déviation ; et
- il est dit indifférent si la déviation n'a aucune influence sur lui ou si son écart n'est pas observable ou mesurable.

A partir de ces définitions, on caractérise chaque déviation par un état qualitatif dans un tableau tel que celui de la figure 5. Ce tableau comporte une colonne par déviation et une ligne par paramètre. Dans chaque case de ce tableau, on indique le domaine (tel que déterminé d'après la figure 3 ou 4) et la catégorie du paramètre répertorié (primaire, secondaire, tertiaire ou indifférent). Bien entendu, cet exemple n'est pas limitatif, et l'on peut prévoir d'autres catégories, et leur nombre peut être différent.

Le diagnostic est effectué par comparaison (13 en figure 1) de l'état courant de l'équipement 1 avec les états qualitatifs relatifs à chacune des déviations répertoriées dans le tableau de la figure 5. On associe une règle experte de diagnostic à chaque groupe de symptômes. Le diagnostic est obtenu par l'application, pour chaque déviation, de trois règles pour l'exemple décrit ici (pour N déviations, on applique 3N règles à savoir une règle pour chacun des trois paramètres significatifs : primaire, secondaire et tertiaire).

Une règle est définie par des prémisses et une conclusion. Ainsi, par exemple, en figure 6, on a représenté la règle relative à la déviation 1 de la figure 5, pour des paramètres primaires (nom de règle = déviation 1 primaire). Les prémisses tirées de la première colonne du tableau de la figure 5, concernent donc les paramètres 1, 4 et 5, qui sont respectivement croissant, croissant et décroissant. On pourrait en tirer la conclusion que si l'état courant vérifie ces trois prémisses, l'existence de la déviation 1 est confirmée. Ces règles peuvent être facilement modifiées (il suffit de modifier la liste des prémisses), pour tenir compte par exemple d'une modification d'équipement ou d'une meilleure définition des déviations.

Cependant le comportement d'un équipement n'est pas forcément prévisible dans ses moindres détails et dans toutes les combinaisons de symptômes pour diverses raisons telles que: difficulté de modélisation, environnement non contrôlé, panne de capteur, déviation non prévue ...

Par conséquent, l'application d'une règle de la façon suivante : "si toutes les prémisses concernant la déviation X sont présentes avec un coefficient d'appartenance de 1, alors on diagnostique la déviation X" ne serait pas acceptable, car elle ne permettrait pas d'identifier des déviations pour lesquelles par exemple 90 % des prémisses sont vérifiées.

Selon l'invention, on n'impose aucun seuil pour les coefficients d'appartenance pour accepter une règle. Toutes les règles de diagnostic sont donc acceptables et acceptées, et on obtient donc toutes les conclusions possibles.

On évalue les valeurs des catégories élémentaires des paramètres (primaire, secondaire, tertiaire) comme étant la moyenne des coefficients d'appartenance (µ) de chacune des prémisses de chaque règle.

Pour chaque déviation, I'évaluation globale est obtenue en calculant la moyenne pondérée des valeurs des catégories élémentaires précitées. On attribue le poids le plus élevé à la catégorie primaire, un poids moins élevé à la catégorie secondaire, et un poids encore moins élevé à la catégorie tertiaire. On peut ainsi classer les différentes déviations (14 en figure 1). La conclusion peut être tirée par exemple en estimant que si la valeur de la catégorie considérée dépasse un seuil donné, la déviation correspondante existe effectivement (étape 15 en figure 1).

Un indice de gravité de la déviation peut être fixé par exemple en calculant une moyenne pondérée des rapports X/seuil (avec X = {P-P ref}/P ref comme déjà précisé). La pondération est également effectuée comme indiqué ci-dessus, mais en tenant également compte du fait que la variation (croissant, constant ou décroissant) est ou non dans le sens attendu d'après la caractérisation de cette déviation.

Bien entendu, si l'on veut déterminer la façon dont un diagnostic a été établi par un calculateur, on peut accéder aux différents paramètres et au processus suivi par le calculateur pour établir le diagnostic.

Lorsque l'équipement 1 est en fonctionnement, on enregistre les valeurs que prennent les paramètres. Le traitement de l'historique de ces valeurs peut donner une indication sur leurs évolutions prévisibles pour des conditions d'environnement données et pour des commandes extérieures données, et le délai avant franchissement d'un seuil jugé critique. Bien entendu, la mesure des paramètres peut se faire à une cadence très rapide si ces paramètres sont susceptibles de varier rapidement, mais leur enregistrement peut être effectué à des intervalles relativement longs seulement, lorsqu'ils varient de façon significative, afin de ne pas avoir à mémoriser un trop grand nombre de valeurs. Le traitement de l'historique des valeurs mémorisées des différents paramètres peut par exemple consister à approximer leurs évolutions à l'aide de fonctions, ces fonctions peuvent être par exemple des polynômes, des exponentielles, etc ..., connus en soi. Les courbes de tendance ainsi obtenues peuvent être affichées sur un écran et/ou imprimées. L'extrapolation permettant de faire des prévisions peut être obtenue (étape 16 en figure 1) par régression linéaire sur le dernier laps de temps de fonctionnement. Grâce à ces courbes de tendance et à leur extrapolation, on peut par exemple déterminer le temps pendant lequel l'équipement peut encore fonctionner sans risque de panne, et améliorer l'exploitation de l'équipement et optimiser sa maintenance.

## Revendications

1. Procédé de diagnostic d'un processus évolutif consistant :
- à mesurer des grandeurs physiques (2) caractéristiques de ce processus (1),
- à établir à partir de ces grandeurs un état courant (8) du processus et un état de référence (9) de ce même processus,
- à comparer ces deux états grandeur par grandeur, les valeurs de grandeurs de l'état courant étant attribuées à plusieurs domaines selon leur écart par rapport à la valeur de référence respective, et les grandeurs étant classées en plusieurs catégories élémentaires indicatives de l'importance de chaque grandeur pour l'évolution du processus relative à une déviation répertoriée, et
- à établir la présence d'une déviation en associant à la déviation pour chaque catégorie élémentaire des règles expertes dont les prémisses qualifient chacune l'appartenance d'une grandeur mesurée à un domaine.

2. Procédé selon la revendication 1, caractérisé par le fait que l'on mesure également des grandeurs relatives à l'environnement (3) et à des commandes externes (4).

3. Procédé selon la revendication 1 ou 2, caractérisé en ce que lorsque l'on ne peut pas mesurer directement certaines grandeurs, on les calcule à partir des grandeurs mesurées (7, 7A).

4. Procédé selon l'une des revendications précédentes, caractérisé par le fait que l'on obtient l'état de référence par simulation à partir des grandeurs mesurées, en utilisant un modèle mathématique.

5. Procédé selon l'une des revendications 1 à 3, caractérisé par le fait que l'on obtient l'état de référence à partir de valeurs mémorisées.

6. Procédé selon la revendication 4 ou 5, caractérisé par le fait que l'état de référence est obtenu par apprentissage.

7. Procédé selon la revendication 4, 5 ou 6, caractérisé par le fait que l'état de référence évolue en fonction des conditions d'environnement et de commande du processus.

8. Procédé selon l'une des revendications précédentes, caractérisé par le fait qu'à partir de la comparaison on surveille le déroulement du processus ou on recherche les meilleures conditions de déroulement et on détecte les signes avant-coureurs de pannes potentielles.

9. Procédé selon la revendication 8, caractérisé par le fait que le diagnostic est effectué en comparant l'état courant à des états qualitatifs répertoriés caractérisant différentes situations pouvant évoluer vers des pannes.

10. Procédé selon l'une des revendications précédentes, caractérisé par le fait que les catégories de classement des grandeurs de l'état courant sont définies à partir de valeurs de grandeurs correspondantes relevées en l'absence d'anomalies et en définissant les limites de ces catégories à partir de la détermination de l'écart-type de la moyenne et des valeurs minimum et maximum de la distribution des écarts relatifs de chaque grandeur par rapport auxdites valeurs de référence, en fixant ces limites de façon que des proportions déterminées des valeurs relevées appartiennent aux différentes catégories.

11. Procédé selon la revendication 10, caractérisé par le fait que l'on établit un diagnostic en associant à chaque état qualitatif répertorié susceptible d'évoluer vers une panne une règle dont les prémisses qualifient chacune l'appartenance d'une grandeur mesurée à une desdites catégories de classement, et en évaluant les catégories des grandeurs comme étant à chaque fois la moyenne des coefficients d'appartenance de chacune des prémisses de chaque règle.

12. Procédé selon l'une des revendications précédentes, caractérisé par le fait que l'on établit des courbes de tendance à partir des grandeurs mesurées (16).

## Patentansprüche

1. Diagnoseverfahren für einen evolutiven Prozeß, das darin besteht,
- für diesen Prozeß (1) charakteristische physikalische Größen zu messen (2),
- ausgehend von diesen Größen einen laufenden Zustand des Prozesses zu erstellen (8) und eine Referenzzustand desselben Prozesses zu bilden (9),
- die beiden Zustände Größe für Größe miteinander zu vergleichen, wobei die Werte der Größen des laufenden Zustands mehreren Bereichen gemäß ihrer Abweichung vom entsprechenden Referenzwert zugeordnet werden und die Größen in mehrere Elementarkategorien unterteilt werden, die auf die Bedeutung jeder Größe für die Evolution des Prozesses aufgrund einer festgestellten Verschlechterung hinweisen,
- und das Vorliegen einer Verschlechterung festzustellen, indem der Verschlechterung für jede Elementarkategorie Expertenregeln zugeordnet werden, deren Prämissen je die Zugehörigkeit einer gemessenen Größe zu einem Bereich qualifizieren.

2. Verfahren nach Anspruch 1, dadurch gekennzeichnet, daß man auch Größen bezüglich der Umwelt (3) und Größen bezüglich äußerer Steuereinwirkungen (4) mißt.

3. Verfahren nach Anspruch 1 oder 2, dadurch gekennzeichnet, daß bestimmte Größen, die nicht direkt gemessen werden können, ausgehend von gemessenen Größen berechnet werden (7, 7A).

4. Verfahren nach einem der vorstehenden Ansprüche, dadurch gekennzeichnet, daß man den Referenzzustand durch Simulation ausgehend von gemessenen Größen und unter Verwendung eines mathematischen Modells erhält.

5. Verfahren nach einem der Ansprüche 1 bis 3, dadurch gekennzeichnet, daß man den Referenzzustand ausgehend von gespeicherten Werten erhält.

6. Verfahren nach Anspruch 4 oder 5, dadurch gekennzeichnet, daß der Referenzzustand durch einen Lernprozeß erhalten wird.

7. Verfahren nach Anspruch 4, 5 oder 6, dadurch gekennzeichnet, daß der Referenzzustand sich abhängig von den Bedingungen der Umwelt und den Steuerungen des Prozesses entwickelt.

8. Verfahren nach einem der vorstehenden Ansprüche dadurch gekennzeichnet, daß aufgrund des Vergleichs der Ablauf des Prozesses überwacht oder die besten Bedingungen für den Ablauf gesucht werden und daß die Anzeichen erfaßt werden, die Vorläufer möglicher Ausfälle bilden.

9. Verfahren nach Anspruch 8, dadurch gekennzeichnet, daß die Diagnose erfolgt, indem der laufende Zustand mit gespeicherten qualitativen Zuständen verglichen wird, die verschiedene Zustände charakterisieren, welche zu Ausfällen führen können.

10. Verfahren nach einem der vorstehenden Ansprüche, dadurch gekennzeichnet, daß die Klassifizierungskategorien der Größen des laufenden Zustands ausgehend von Werten entsprechender Größen definiert werden, die bei Abwesenheit von Anomalien erfaßt wurden, indem die Grenzen dieser Kategorien ausgehend von der Bestimmung der typischen Abweichung des Mittelwerts und der Mindest- und Höchstwerte der Verteilung der relativen Abweichungen jeder Größe bezüglich der Referenzwerte definiert werden, indem diese Grenzwerte so festgelegt werden, daß bestimmte Proportionen der erfaßten Werte den verschiedenen Kategorien angehören.

11. Verfahren nach Anspruch 10, dadurch gekennzeichnet, daß man eine Diagnose erstellt, indem jedem gespeicherte qualitativen Zustand, der zu einem Ausfall führen könnte, eine Regel zugeordnet wird, deren Prämissen die Zugehörigkeit jeder gemessenen Größe zu einer der Klassifizierungskategorie qualifizieren, und indem die Kategorien der Größen als jeweils der Mittelwert der Zugehörigkeitskoeffizienten jeder der Prämissen jeder Regel bewertet werden.

12. Verfahren nach einem der vorstehenden Ansprüche, dadurch gekennzeichnet, daß man Tendenzkurven ausgehend von den gemessenen Größen erstellt (16).

## Claims

1. Diagnostic method for an evolutionary process, consisting:
- in measuring physical quantities (2) characteristic of this process (1),
- in establishing from these quantities a current state (8) of the process and a reference state (9) of this same process,
- in comparing these two states, quantity by quantity, the values of quantities in the current state being assigned to a plurality of domains according to their difference with respect to the respective reference value, and the quantities being classed in a plurality of elementary categories indicative of the importance of each quantity for the evolution of the process relating to a catalogued deviation, and
- in establishing the presence of a deviation by associating with the deviation, for each elementary category, expert rules whose premises each qualify the membership of a measured quantity to a domain.

2. Method according to Claim 1, characterized in that quantities relating to the environment (3) and to external controls (4) are also measured.

3. Method according to Claim 1 or 2, characterized in that, when certain quantities cannot be measured directly, they are calculated from the measured quantities (7, 7A).

4. Method according to one of the preceding claims, characterized in that the reference state is obtained by simulation from the measured quantities, using a mathematical model.

5. Method according to one of Claims 1 to 3, characterized in that the reference state is obtained from stored values.

6. Method according to Claim 4 or 5, characterized in that the reference state is obtained by learning.

7. Method according to Claim 4, 5 or 6, characterized in that the reference state evolves as a function of the environmental and control conditions of the process.

8. Process according to one of the preceding claims, characterized in that, on the basis of the comparison, the development of the process is monitored or attempts are made to find better operating conditions, and the precursor signs of potential breakdowns are detected.

9. Method according to Claim 8, characterized in that the diagnosis is made by comparing the current state with catalogued qualitative states characterizing various situations capable of evolving into breakdowns.

10. Method according to one of the preceding claims, characterized in that the categories for classifying the quantities in the current state are defined on the basis of values of corresponding quantities measured in the absence of anomalies, and by defining the limits of these categories on the basis of determining the standard deviation of the mean and the minimum and maximum values of the distribution of the relative differences of each quantity with respect to the said reference values, while fixing these limits in such a way that determined proportions of the measured values belong to the various categories.

11. Method according to Claim 10, characterized in that a diagnosis is established by combining with each catalogued qualitative state capable of evolving into a breakdown a rule whose premises each determine membership of a measured quantity to one of the said classification categories, and by evaluating the categories of the quantities as being, in each case, the mean of the membership coefficients of each of the premises of each rule.

12. Method according to one of the preceding claims, characterized in that tendency curves are established from the measured quantities (16).
